# EUROPEAN PATENT SPECIFICATION

(11) **EP 2 334 959 B1**
(45) Date of publication and mention of the grant of the patent: **06.03.2013**
(21) Application number: 09789502.3
(22) Date of filing: 11.03.2009
(51) Int. Cl.: F16J 15/12, F16L 23/18, F16J 15/10

(54) **HYGIENIC TUBE FITTING GASKET**
DICHTUNG FÜR EIN HYGIENISCHES ROHR
JOINT DE RACCORD DE TUBE HYGIENIQUE

(30) Priority: 29.09.2008 US 100817 P
(43) Date of publication of application: 22.06.2011
(73) Proprietor: Parker-Hannifin Corporation, Cleveland, Ohio 44124-4141 (US)
(72) Inventor: DUBIEL, Robert, J., Amherst VA 24521 (US)
(74) Representative: Belcher, Simon James
(86) International application number: PCT/US2009/036782
(87) International publication number: WO 2010/036388

(56) References cited:
- GB-A- 2 377 975
- US-A1- 2007 045 968

## Description

### BACKGROUND OF THE INVENTION

The present invention relates broadly to a gasket construction for providing a fluid seal intermediate a pair of opposed, mating parts or structures, and more specifically to such a construction which is particularly adapted for use in tube fitting connections commonly found in hygienic, i.e., sanitary, fluid systems.

Hygienic tube fitting connections or couplings are used in a variety of processes such as found in the food, beverage, diary, pharmaceutical, and biotech industries. Such connections are employed in the coupling of stainless steel or other tubing lines for fluids to another such line or to a fluid component such as a valve, regulator, or manifold. The connections are terms "hygienic" or "sanitary" as they are designed to be easily disassembled for cleaning and to minimize fluid entrapment which could cause contamination in the fluid line. The design of such connections is prescribed by various industry standards such as ASME BPE, 3-A, and ISO 2852.

In basic construction, the tubing connections of the type herein involved typically include a length of tubing having a butt end which terminates in a formed, machined, brazed, welded, or other flange. The face of the flange may itself be formed as having an annular groove into which a ring-shaped gasket may be seated.

Such gaskets, which conventionally are formed of a rubber, may be generally flat but as having an upstanding lobe or bead on each side thereof. With one of beads seated within the groove on the face of the flange, the bead on the other side of the gasket may be seated within a corresponding grooved formed on a mating flange which may be on another length of tubing or on a fluid component. The flanges as so mated are secured with the gasket interposed therebetween with a surrounding clamp. As the clamp is tightened, the gasket is compressed to provide the connection with a fluid-tight seal.

Hygienic tubing connections and gaskets therefor are further described in U.S. Patent Nos. 5,971,399, 5,749,586, 6,318,576 and 6,857,638, and in U.S. Pat. Appln. Pub. Nos. US 2002/0074798, 2007/0045968 and 2008/00023960.

As to the gaskets themselves, such gaskets may be formed entirely of rubber or another elastomeric polymeric material, or as a composite of such material and another material such as a PTFE for increased chemical or extrusion resistance. Such other material may be provided in the form of a coating or as an upper and lower layer of the gasket including the beads, which layers may be laminated or otherwise bonded to an internal core of the rubber material. Such gaskets alternatively may be provided as an overmolding of rubber on a plastic or other retainer.

Hygienic gaskets also may be formed as having a lip surrounding the outer diameter thereof. Such lip may be fitted over the outer diameter of one of the flanges to aid in the alignment of the gasket in the connection and/or to better secure the gasket to the flange to facilitate assemble or disassembly of the connection.

GB-A-2377975 discloses a gasket device for a pipe joint between two pipe ends. A gasket is supported by a support structure in which the gasket is received. The support structure includes gripping portions which clip on to the end of a pipe to locate the gasket.

Ideally, hygienic tube fitting gaskets of the type herein involved should provide effective sealing under a variety of conditions, at both low and high pressures, and with a minimum of interference with the fluid flow. Also desired would be a gasket which controls the degree of compression of the elastomer to avoid over-compression and thereby ensure more reliable fluid-tight seal and longer service life. It is believed that a hygienic gasket offering such advantages would be well-received by the process industries.

### BROAD STATEMENT OF THE INVENTION

The invention provides a gasket for a fitting connection, as defined in claim 1.

The gasket construction is particularly adapted for hygienic tube fittings such as including a tube having an open surrounded by a flange with a circumferential receiving groove. The generally-annular gasket includes a plastic or otherwise generally-rigid retainer and an elastomeric seal element which is overmolded or otherwise supported on the retainer. The retainer has an inner perimeter and an outer perimeter and opposing first and second sides. The first and second sides each extend in a radial direction intermediate the inner and outer perimeter and each has a circumferential recess extending from the inner perimeter to an axial end wall adjacent the outer perimeter and an upstanding shoulder surrounding the recess.

The seal element is supported on the retainer in the recesses on each of the sides. The seal element has a first radial face on the first side of the retainer and a second radial face on the second side of the retainer. Each of the radial faces has a circumferential inner diameter bead and a circumferential outer diameter bead extending axially beyond the inner diameter bead. The outer diameter bead on the first radial face of the seal element is configured to be seatable within a groove of the flange of the tubing end with the inner diameter bead being supported on the face of the flange.

The present invention, accordingly, comprises the construction, combination of elements, and/or arrangement of parts and steps which are exemplified in the detailed disclosure to follow. Advantages of the present invention include a gasket for use between a pair of mating flanges wherein the gasket has generally-rigid retainer and an elastomeric seal element. As configured with an upstanding shoulder and/or with additional raised features, such retainer may be used to provide a positive stop ensuring a controlled compression of the seal element.

Additional advantages include such a gasket having the inner diameter beads which provide localized high sealing points on each face of the gasket such that the parallelism of the mating flanges is less critical. Moreover, with the inner perimeter of the retainer being provided to extend radially beyond each of the inner diameter beads, it may be better ensured that the compression of the seal element does not cause the elastomeric material of the seal element to be extruded into the fluid flow path through the fitting. These and other advantages will be readily apparent to those skilled in the art based upon the disclosure contained herein.

### BRIEF DESCRIPTION OF THE DRAWINGS

For a fuller understanding of the nature and objects of the invention, reference should be had to the following detailed description taken in connection with the accompanying drawings wherein:
Fig. 1 is a topside perspective view of an illustrative embodiment of a hygienic tube fitting gasket in accordance with the present invention including a retainer and a seal element;
Fig. 2 is an underside perspective view of the gasket of Fig. 1;
Fig. 3 is a partial perspective cross-sectional view of the gasket of Fig. 1 taken through line 3-3 of Fig. 1;
Fig. 4 is a perspective cross-sectional view as in Fig. 3 showing the retainer without the seal element;
Fig. 5 is a perspective assembly view showing the gasket of Fig. 1 as installed for use within a representative hygienic tube fitting connection; and
Fig. 6 is a cross-sectional view showing the gasket of Fig. 1 as compressed within the connection of Fig. 5.

The drawings will be described further in connection with the following Detailed Description of the Invention.

### DETAILED DESCRIPTION OF THE INVENTION

Certain terminology may be employed in the following description for convenience rather than for any limiting purpose. For example, the terms "forward" and "rearward," "front" and "rear," "right" and "left," "upper" and "lower," and "top" and "bottom" designate directions in the drawings to which reference is made, with the terms "inward," "inner," "interior," or "inboard" and "outward," "outer," "exterior," or "outboard" referring, respectively, to directions toward and away from the center of the referenced element, the terms "radial" or "horizontal" and "axial" or "vertical" referring, respectively, to directions or planes which are perpendicular, in the case of radial or horizontal, or parallel, in the case of axial or vertical, to the longitudinal central axis of the referenced element, and the terms "downstream" and "upstream" referring, respectively, to directions in and opposite that of fluid flow. Terminology of similar import other than the words specifically mentioned above likewise is to be considered as being used for purposes of convenience rather than in any limiting sense.

In the figures, elements having an alphanumeric designation may be referenced herein collectively or in the alternative, as will be apparent from context, by the numeric portion of the designation only. Further, the constituent parts of various elements in the figures may be designated with separate reference numerals which shall be understood to refer to that constituent part of the element and not the element as a whole. General references, along with references to spaces, surfaces, dimensions, and extents, may be designated with arrows. Angles may be designated as "included" as measured relative to surfaces or axes of an element and as defining a space bounded internally within such element therebetween, or otherwise without such designation as being measured relative to surfaces or axes of an element and as defining a space bounded externally by or outside of such element therebetween. Generally, the measures of the angles stated are as determined relative to a common axis, which axis may be transposed in the figures for purposes of convenience in projecting the vertex of an angle defined between the axis and a surface which otherwise does not extend to the axis. The term "axis" may refer to a line or to a transverse plane through such line as will be apparent from context.

For purposes of illustration, the precepts of the hygienic gasket construction are described principally in connection with its configuration for use as a seal between the mating flanges of a pair of tubing ends or other such pairs of fluid components, such as a tubing end and a valve, regulator or manifold, in a hygienic fluid system. In view of the discourse to follow, however, it will be appreciated that aspects of the present invention may find utility in other fluid sealing applications, such as for liquid, gas, particulate solids, and/or plasmas, requiring a gasket of the type herein involved. Use within those such other applications therefore should be considered to be expressly within the scope of the present invention.

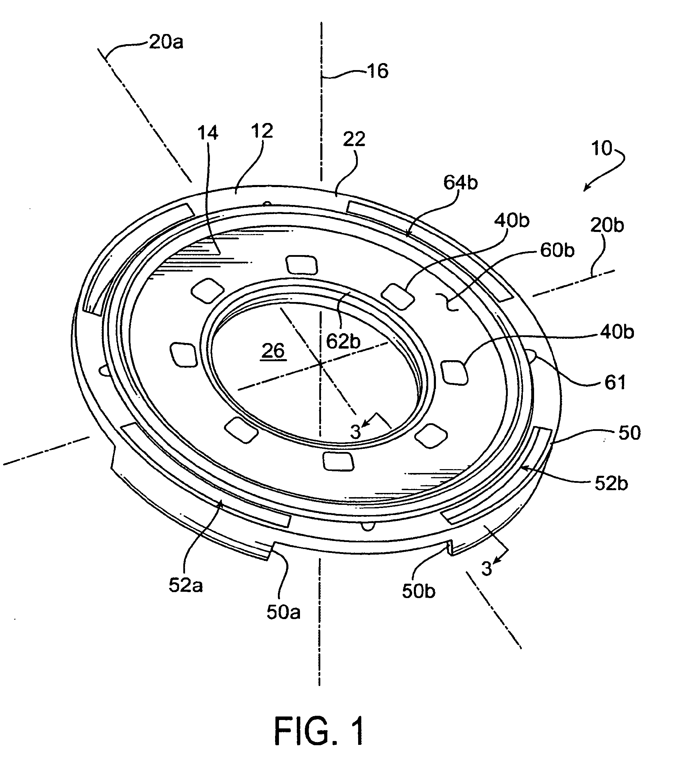

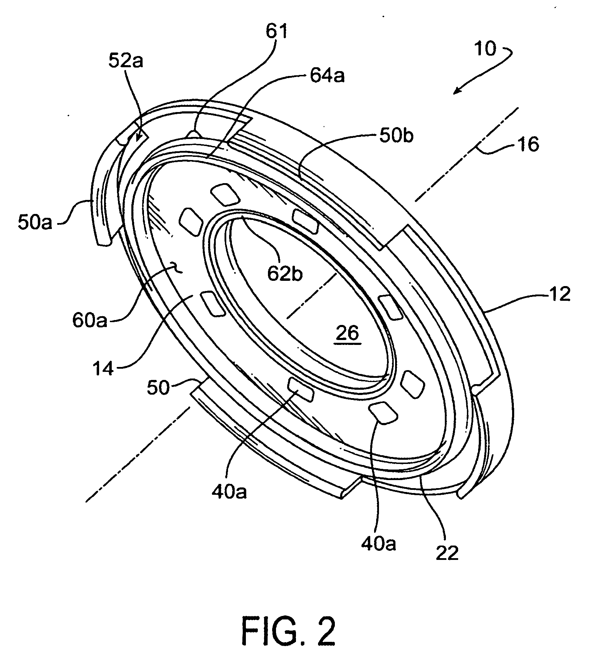

Referring then to the figures wherein corresponding reference characters are used to designate corresponding elements throughout the several views with equivalent elements being referenced with prime or sequential alphanumeric designations, shown generally at 10 in the respective topside and underside perspective views of Figs. 1 and 2 is a representative embodiment according to the present invention of a gasket construction configured for interposition between a pair of mutually-opposed flanges or other mating surfaces. In basic construction, gasket 10 includes a generally annular and, essentially, planar retainer, 12, and a generally annular seal element, 14, extending about a central longitudinal axis, 16, of the gasket 10 adjacent the inner perimeter of the retainer 12 to be compressible intermediate the mating surfaces (not shown in Fig. 1) for effecting a fluid-tight or other environmental seal therebetween.

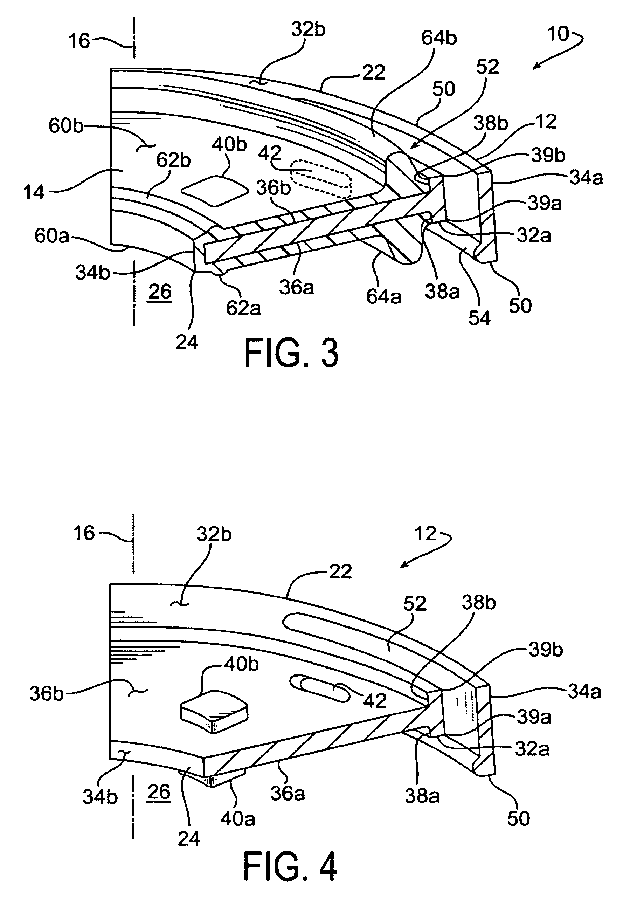

Retainer 12 may be configured and sized as shown for interposition between the mating flange surfaces. In this regard, retainer 12 may extend about the diameter or other radial dimensions defined by the orthogonal horizontal or radial axes referenced at 20a-b in Fig. 1 as having an outer perimeter or margin, referenced at 22, and an inner perimeter or margin, referenced at 24 in the views of Figs. 3 and 4. The perimeters 22 and 24 generally define, respectively, the inner and outer diametric extents of the retainer 12 which generally may be sized with the seal element 14 such that the gasket 10 is receivable intermediate the mating surfaces to be sealed. Together, the outer and inner perimeters 22 and 24 define a closed geometric shape which, in turn, encloses an opening, 26, which may be configured for registration with the opening in the assembly to be sealed. Although the shape of retainer 12 is shown for purposes of illustration to be generally circular, such shape alternatively may be elliptical, otherwise arcuate or curvilinear, or it may be square or otherwise regular or irregular polygonal, as may be dependent upon the geometry of the fluid components in the intended application.

With additional and, for the moment, particular reference to the cross-sectional view of gasket 10 shown in Fig. 3 and of retainer 12 itself shown in Fig. 4, retainer 12 further may be seen to be formed relative to axis 16, which axis extends in an axial direction generally normal to the radial direction referenced by axes 20 of Fig. 1, as having mutually-opposing lower and upper radial sides, 32a-b, respectively, extending between the inner and outer perimeters 22 and 24, and mutually-opposing outer and inner axial sides or faces, 34a-b, respectively, each of which delineates a corresponding one of the perimeters 22 and 24 in extending between the radial faces 32a-b. Radial faces 32a-b each may be formed as having, respectively, a circumferential recess, 36a-b, each extending from the inner perimeter 24 to a corresponding axial end wall, 38a-b, adjacent outer perimeter 22, each of which end walls 38a-b defines a corresponding upstanding shoulder, 39a-b, surrounding the respective recess 36a-b.

Each of the recesses 36 may be generally planar relative to the axes 20 (Fig. 1), but as having on each side of the retainer 12 as shown in Fig. 4 a raised portion, 40a-b, or series of such portions 40, two of which on each side 32 of the retainer 12 are commonly referenced in Figs. 1-2. Each of the portions 40a-b may extend axially along axis 16 to be generally coterminous in such dimension with the corresponding retainer side 32a-b on which the area 40 is formed. As may be seen in Fig. 4, one or more slots or other apertures, 42, also may be formed to extend axially though the thickness dimension of the retainer 12 in the area of the recesses 36.

With continuing reference to Figs 3 and 4, retainer 12 may be seen to be further formed as being fringed by a flexible skirt, 50, surrounding the outer perimeter 22 and as extending axially downwardly beyond the shoulder 39 on one of the sides 32 of the retainer. Skirt 50 may be separated from the remainder of the retainer 12 by a slot, 52, and may have a radially inwardly-extending tooth, 54, or other such feature to effect an snap-on or other interfering engagement about one of the flanges in connection in the manner to be described hereinafter. With momentary reference again to the perspective views of Figs. 1 and 2, skirt 50 may be formed as having one or more flexible segments, 50a-b, as each may be defined by a corresponding slot 52a-b (Fig. 1).

Retainer 12 may be cast, machined, molded, stamped, or otherwise fabricated from, as compared to the seal element 14, a more rigid material such as a metal or ceramic. For hygienic fluid systems applications, however, retainer 12 preferably may be molded of a plastic which may be reinforced or otherwise filled, i.e., a composite, or unfilled. Suitable plastic materials for the construction of retainer 12 include generally resilient materials such as a poly(ether ether ketone), polyimide, polyamide, polyolefin, polyetherimide, polybutylene terephthalate, fluoropolymer, polyvinyl chloride, polysulfone, polyester, acetal homo or copolymer, a TPEs such as a thermoplastic polyurethane (TPU), thermoplastic olefin (TPO), thermoplastic vulcanizate (TPV), or copolyester thermoplastic elastomer (COPE) or polyamide TPE, or a copolymer, blend, mixture, laminate, composite, or other combination of one or more of the foregoing materials. Typically, the plastic material of construction for the molding or other forming of the retainer 12 may have a hardness of between about 85 Shore A and about 65 Shore D.

Returning again to the perspectives views of Figs. 1 and 2, with retainer 12 being provided as has been described, seal element 14 in the further construction of the gasket 10 may be overmolded on, or otherwise adhesively bonded, interference fit, or otherwise disposed on, the retainer 12 as received within the recesses 36a-b to extending around the retainer inner perimeter 24. As so received, seal element 14 has a first radial face, 60a (Fig. 1), extending over the recess 36a on the first side 32a of retainer 12, and a second radial face, 60b (Fig. 2), extending over the recess 36b on the second side 32b of the retainer. To better affix seal element 14 on retainer 12, the retainer may be configured as having one or more undercuts, rabbets, or other features, such as that referenced at 61. As molded or otherwise disposed on retainer 12, seal element 14 may extend through apertures 42 (see Fig. 3 in phantom and Fig. 4) from one side of retainer 12 to the other so as to further attach seal element 14 thereto.

Each of the seal radial faces 60a-b has a respective circumferential inner diameter bead, 62a (Fig. 1) and 62b (Fig. 2), and a circumferential outer diameter bead, 64a (Fig. 1) and 64b (Fig. 2). Turning now to the cross-sectional view of Fig. 3, it may be seen that the outer diameter beads 64a-b may extend radially beyond the corresponding inner diameter bead 62a-b, shoulder 39a-b, and raised portions 40a-b on the same face 60a-b of the seal element 14, and that the radial faces 60a-b thereof each may extend radially generally coplanarly with the raised portions 40 on the corresponding side 32 of the retainer 12. The inner diameter beads 62a-b themselves also may extend axially beyond, such as by between about 1-100 mils (0.025-2.5 mm), the shoulder 39a-b and raised portions 40a-b on the corresponding side 32 of retainer 12 so as to be axially compressible between the interfacing surface for effecting a fluid-tight or other seal therebetween. With additional reference to the cross-sectional assembly view of Fig. 4, it may be further seen that the retainer inner perimeter 24 is dimensioned to extend radially beyond each of the inner diameter beads 62a-b.

Although each of the beads 62a-b and 64a-b are shown to be continuous, each independently may be provided alternatively as discontinuous, i.e., segmented or otherwise interrupted, and as single, double, or multiple beads, lobes, or other rings. Each of the beads 62 and 64, moreover, may be shaped as is shown to have a generally circular or elliptical cross-sectional geometry, but alternatively may be configured as being lobe or otherwise arcuately-shaped.

In the manufacture of gasket 10, with the retainer 12 being formed, for example, as a plastic molding, seal element 14 may be overmolded onto the retainer such as by injection, compression, transfer, or other molding. Seal element 14 may be formed of a rubber or other elastomeric material which may be selected specifically for high or low temperature performance, flexibility, and otherwise for compatibility with the fluid being handled. Suitable materials, which may be filled, for example, with glass or carbon black, or which may be unfilled, include natural rubbers such as Hevea and thermoplastic, i.e., melt-processible, or thermosetting, i.e., vulcanizable, synthetic rubbers such as: fluoro- or perfluoroelastomers, chlorosulfonate, polybutadiene, butyl, neoprene, nitrile, polyisoprene, buna-N, copolymer rubbers such as ethylene-propylene (EPR), ethylene-propylene-diene monomer (EPDM), acrylonitrile-butadiene (NBR or HNBR) and styrenebutadiene (SBR), and blends such as ethylene or propylene-EPDM, EPR, or NBR. The term "synthetic rubbers" also should be understood to encompass materials which alternatively may be classified broadly as thermoplastic or thermosetting elastomers such as polyurethanes, silicones, fluorosilicones, styrene-isoprene-styrene (SIS), and styrenebutadiene-styrene (SBS), as well as other polymers which exhibit rubber-like properties such as plasticized nylons, polyolefins, polyesters, ethylene vinyl acetates, fluoropolymers, and polyvinyl chloride. As used herein, the term "elastomeric" is ascribed its conventional meaning of exhibiting rubber-like properties of compliancy, resiliency or compression deflection, low compression set, flexibility, and an ability to recover after deformation, i.e., stress relaxation.

Seal elements 14 exhibits a reduced yield stress as compared to retainer 12 and, accordingly, the inner diameter beads 62 thereof are deformable for conforming to irregularities existing between the interfacing surfaces. As will be more fully appreciated hereinafter, as a given compressive load is applied to the beads 62a-b of the seal element 14, an increased bearing stress is provided thereon by virtue of the reduced surface area contact of the beads 62. This increased stress is sufficient to exceed the reduced yield stress of the seal element 16 for the deformation thereof effecting the fluid-tight or other sealing of the interfacing surfaces.

In service, it has been observed that the provision of the inner diameter beads 62 on the seal element 14 advantageously facilitates the installation and replacement of gasket 10 in accommodating for tolerances or other minor differences in the torque load of the clamps, bolts or other fastening members conventionally employed to join the interfacing surfaces. That is, by virtue of the resiliency of the beads 62, the fluid integrity and other sealing of the gasket 10 may be maintained to some degree even if the joint spacing between the interfacing surface is less than exactly uniform. Moreover, the combination of a relatively incompressible retainer 12 and relatively compressible seal element 14 further provides a gasket construction which minimizes torque loss and thereby obviates much of the need for the periodic re-torquing of the fastening members used to secure the interfacing surfaces. That is, it is well-known that gaskets of the type herein involved may develop a compression set which is manifested by fluid leaks as the tension in the clamp or bolts is relaxed and the fluid-tight sealing of the interfacing surfaces is compromised. In this regard, the provision of the beads 62 on the seal elements 14 , and the relatively high seal which may be developed thereby, helps to better ensure positive sealing, with retainer 12, in turn, synergistically providing generally non-yielding contact in establishing an alternative load torque path minimizing the compression set and leak potential of the gasket 10. Thus, the use of a retainer allows the mating parts to bear stress loads which otherwise would cause the deformation or extrusion of a gasket which lacked a retainer. In the case of a metal retainer 12 or one which is filled with a metal, ceramic, or other thermally-conductive fillers, such contact additionally affords improved heat transfer between the interface surfaces.

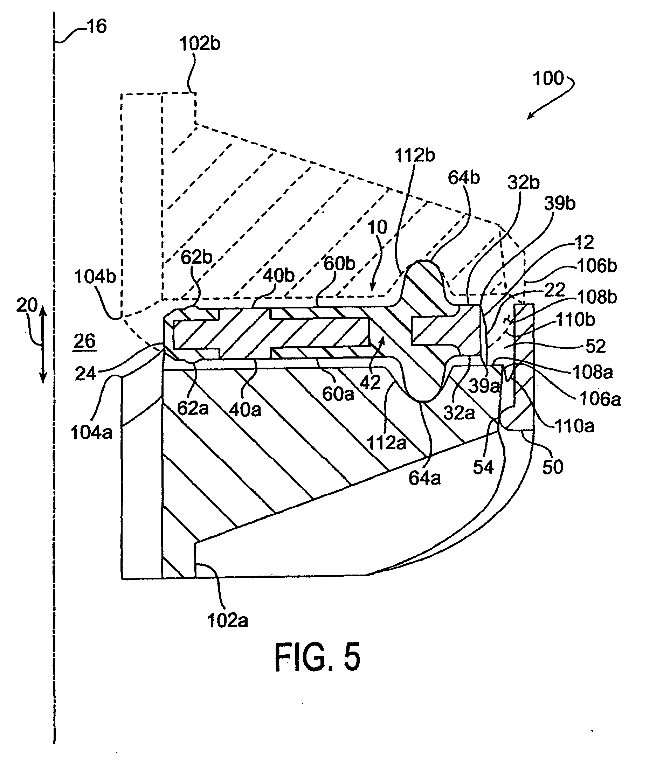

Referring now to the assembly view of Fig. 5, a representative hygienic tube fitting connection incorporating gasket 10 of the present invention is referenced generally at 100 prior to compression as interposed between a pair of mutually-facing, axially spaced-apart mating surfaces. The connection 100 includes a first tube, 102a, and a second tube shown in phantom, 102a, each having an open end, 104a-b, surrounded by a flange, 106a-b. Each flange 106a-b has a forward face, 108a-b, extending radially outwardly from the corresponding tube open end 104a-b to an outer periphery, 110a-b. Each of the faces 108a-b, which faces comprise the mating surfaces in the connection 100, have a circumferential groove, 112a-b, formed therein which is generally adjacent the outer periphery 110a-b.

As interposed between the mating faces 108a-b, the opening 26 of the gasket 10 may be aligned in registration with the tube open ends 104a-b with the outer diameter beads 64a-b of the gasket each being seated within a corresponding groove 112a-b of one of the faces 108. Each beads 64 may be sized to fill not more than 100% of the total volume of the corresponding groove 112 so as not to create an undue overfill which could cause extrusion of the material of the seal element 14 into the fluid flow path, represented by the arrow 120, such as could be caused by thermal expansion. As shown, gasket 10 itself may be retained on one of the flanges 106 by means of the interfering engagement of the skirt 50 and tooth 54 thereof about the periphery 110a of flange 106a.

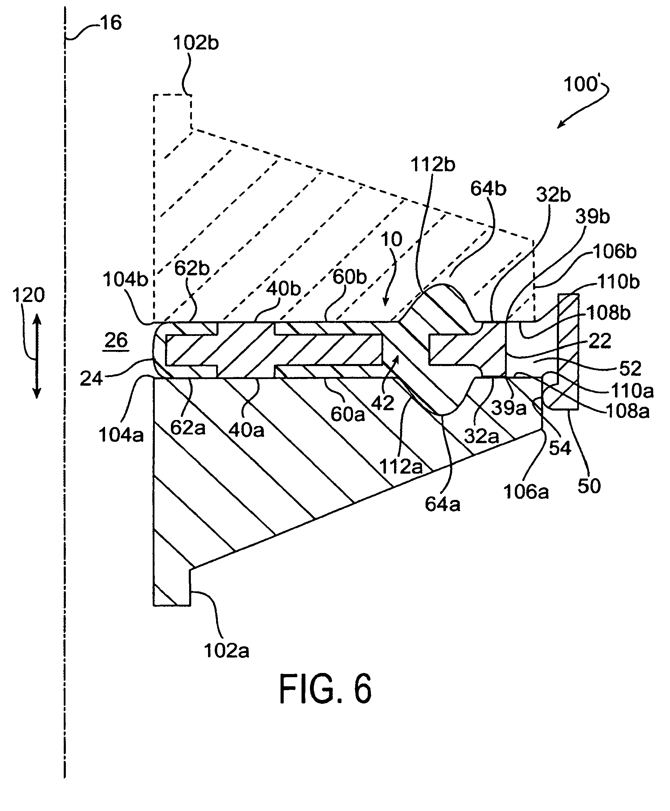

Looking now lastly to Fig. 6, connection 100 reappears at 100' with the mating faces 108a-b being axially displaced towards one another such a with a clamp (not shown) thereby placing gasket 10 into compression therebetween. In such compression, inner diameter beads 62a-b are compressed from their free state shown in Fig. 5 into an energized state shown in Fig. 6. Such energized state effects, for example, a generally fluid-tight seal between each of the faces 108.

Advantageously, over-compression of the seal element 14 and its extrusion into the fluid flow path 120 and/or a compromise of the integrity of the fluid seal may be controlled by the abutting engagement of the raised areas 40a-b and/or the shoulders 39a-b against a confronting one of the faces 108a-b. Moreover, with the inner perimeter 24 of the retainer 14 extruding radially beyond the inner diameter beads 62, the potential for extrusion of the seal element 14 into the fluid flow path element 120 may be further controlled.

Thus, a unique gasket construction for hygienic fluid systems or other applications is described which exhibits reliable sealing properties while providing for the exclusion of fluid accumulation between the interfacing surfaces.

## Claims

1. A gasket (10) for a fitting connection, the connection including a fitting (100) having an open end surrounded by a flange (106a), the flange having a forward face (108a) extending radially outwardly from the tube open end to an outer periphery (110a), the face having a circumferential groove (112a) formed therein adjacent the outer periphery, the gasket comprising:
a generally annular retainer (12) having an inner perimeter (24) and an outer perimeter (22), and having opposing first and second sides (32a, 32b) each extending in a radial direction intermediate the inner and outer perimeter, and
a generally annular seal element (14) disposed on the retainer, the seal element having a first radial face (60a) on the first side (32a) of the retainer and a second radial face (60b) on the second side (32b) of the retainer,
**characterized in that** each of the first and second sides of the retainer has a circumferential recess (36a, 36b) extending from the inner perimeter (20) to an axial end wall (38a, 38b) adjacent the outer perimeter (22) defining an upstanding shoulder (39a, 39b) surrounding the recess, the seal element (14) being disposed in the recesses on each of the sides (32a, 32b) of the retainer,(12) and
each of the radial faces (60a, 60b) of the seal element (14) has a circumferential inner diameter bead (62a, 62b) and a circumferential outer diameter bead (64a, 64b) extending axially beyond the inner diameter bead (62a, 62b) , in which the outer diameter bead (64a, 64b) on the first radial face (60a) of the seal element (14) is configured so that, in use, it can be seated within the groove (112a) of the flange (106a), and in which, with the outer diameter bead (64a) on the first radial face (60a) being seated within the groove (112a) of the flange (106a), the inner diameter bead (62a) on the first radial face (60a) can sealingly engage with the flange forward face when compressed between the flange forward face (108a) and a confronting surface (108b).

2. The gasket of claim 1 in which the retainer inner perimeter (22) extends radially beyond each of the inner diameter beads (62a, 62b) of the seal element (14).

3. The gasket of claim 1 in which each of the inner diameter beads (62a, 62b) of the seal element (14) extends axially beyond the shoulder (39a, 39b) on the corresponding side (32a, 32b) of the retainer (12).

4. The gasket of claim 1 in which with the outer diameter bead (64a) on the first radial face (32a) of the seal element (14) being seated within the groove (112a) of the flange (106a), and with the outer diameter bead (64b) on the second radial face (32a) being seated within a groove (112b) of the confronting surface (108b), as the gasket is compressed axially between the flange forward face (108a) and the confronting surface (108b), each of the shoulders (39a, 39b) is abuttable against a corresponding one of the flange forward face and the confronting surface delimiting the compression of the seal element.

5. The gasket of claim 1 in which the retainer (12) further comprises at least one raised portion (40a, 40b) extending axially from the recess (36a, 36b) on each side of the retainer, and in which with the outer diameter bead (64a) on the first radial face (32a) of the seal element (14) being seated within the groove (112a) of the flange (106a), and with the outer diameter bead (64b) on the second radial face (32b) being seated within a groove (112b) of a confronting surface (108b), as the gasket is compressed axially between the flange forward face and the confronting surface, each raised area is abuttable against a corresponding one of the flange forward face and the confronting surface delimiting the compression of the seal element.

6. The gasket of claim 1 in which the retainer (12) further comprises a skirt (50) surrounding the outer perimeter (22), the skirt having one or more segments (50a, 50b) which extend axially downwardly beyond the shoulder (39a, 39b) of one of the sides of the retainer, and in which with the outer diameter bead (64a) on the seal element first radial face (32a) being seated within the groove (112a) of the flange (106a), the skirt segments are receivable in an interfering engagement about the outer periphery of the flange forward face for retaining the gasket on the flange.

7. The gasket of claim 1 in which the seal element is overmolded on the retainer as extending around the inner perimeter thereof.

8. The gasket of claim 1 in which the retainer is formed of a plastic material and the seal element is formed of an elastomeric polymeric material.

9. A fitting connection comprising a fitting having an open end surrounded by a flange, the flange having a forward face extending radially outwardly from the tube open end to an outer periphery, the face having a circumferential groove formed therein adjacent the outer periphery, and a gasket as claimed in any of claims 1 to 8.

## Patentansprüche

1. Dichtung (10) für eine Fittingverbindung, wobei die Verbindung ein Fitting (100) mit einem offenen Ende umfasst, das von einem Flansch (106a) umgeben ist, wobei der Flansch eine Vorderseite (108a) hat, die sich von dem offenen Rohrende zu einem Außenumfang (110a) radial nach außen erstreckt, wobei die Vorderseite eine umlaufende Nut (112a) aufweist, die in dieser nahe des Außenumfangs ausgebildet ist, wobei die Dichtung aufweist:
eine im Wesentlichen ringförmige Halterung (12), die einen Innenumfang (24) und einen Außenumfang (22) hat und die entgegengesetzte erste und zweite Seiten (32, 32b) hat, welche sich jede in einer radialen Richtung zwischen dem Innen- und Außenumfang erstrecken, und
ein im Wesentlichen ringförmiges Dichtelement (14), das an der Halterung angeordnet ist, wobei das Dichtelement eine erste Radialfläche (60a) auf der ersten Seite (32a) der Halterung und eine zweite Radialfläche (60b) auf der zweiten Seite (32b) der Halterung aufweist,
**dadurch gekennzeichnet, dass** jede der ersten und zweiten Seiten der Halterung eine umlaufende Ausnehmung (36a, 36b) hat, die sich von den Innenumfang (24) zu einer axialen Endwand (38a, 38b) nahe des Außenumfangs (22) erstreckt, die eine aufrechte Schulter (39a, 39b) definiert, welche die Ausnehmung umgibt, wobei das Dichtelement (14) in den Ausnehmungen jeder Seite (32a, 32b) der Halterung (12) angeordnet ist und
jede der Radialseiten (60a, 60b) des Dichtelements (14) einen umlaufenden Innendurchmesserwulst (62a, 62b) und einen umlaufenden Außendurchmesserwulst (64a, 64b) hat, der sich axial über den Innendurchmesserwulst (62a, 62b) hinaus erstreckt, wobei der Außendurchmesserwulst (64a, 64b) auf der ersten radialen Seite (60a) des Dichtelements (14) so eingerichtet ist, dass er bei Gebrauch in der Nut (112a) des Flansches (106a) sitzen kann, und wobei, während der Außendurchmesserwulst (64a) auf der ersten Radialseite (60a) in der Nut (112a) des Flansches (106a) sitzt, der Innendurchmesserwulst (62a) auf der ersten Radialseite (60a) dichtend an der Flanschvorderseite angreifen kann, wenn er zwischen der Flanschvorderseite (108a) und einer gegenüberstehenden Oberfläche (108b) komprimiert wird.

2. Dichtung nach Anspruch 1, bei der sich der Innenumfang (22) der Halterung radial über jeden der Innendurchmesserwülste (62a, 62b) des Dichtelements (14) hinweg erstreckt.

3. Dichtung nach Anspruch 1, bei der jeder der Innendurchmesserwülste (62a, 62b) des Dichtelements (14) sich axial über die Schulter (39a, 39b) auf der entsprechenden Seite (32a, 32b) der Halterung (12) hinaus erstreckt.

4. Dichtung nach Anspruch 1, bei der wenn der Außendurchmesserwulst (64a) an der ersten Radialseite (32a) des Dichtelements (14) in der Nut (112a) des Flansches (106a) sitzt und wenn der Außendurchmesserwulst (64b) an der zweiten Radialseite (32a) in einer Nut (112b) der gegenüberstehenden Oberfläche (108b) sitzt, während die Dichtung axial zwischen der Flanschvorderseite (108a) und der gegenüberstehenden Oberfläche (108b) komprimiert wird, jede der Schultern (39a, 39b) an eine entsprechende der Flanschvorderseite und der gegenüberstehenden Oberfläche anschlagen kann, wodurch die Komprimierung des Dichtelements begrenzt wird.

5. Dichtung nach Anspruch 1, bei der die Halterung (12) ferner mindestens einen angehobenen Abschnitt (40a, 40b) hat, der sich axial von der Ausnehmung (36a, 36b) auf jeder Seite der Halterung erstreckt, und bei der, wenn der Außendurchmesserwulst (64a) an der ersten Radialseite (32a) des Dichtelements (14) in der Nut (112a) des Flansches (106a) sitzt und wenn der Außendurchmesserwulst (64b) an der zweiten Radialseite (32b) in einer Nut (112b) einer gegenüberstehenden Oberfläche (108b) sitzt, während die Dichtung axial zwischen der Flanschvorderseite und der gegenüberstehenden Oberfläche komprimiert wird, jeder hervorgehobene Bereich an einem entsprechenden der Flanschvorderseite und der gegenüberstehenden Oberfläche anschlagen kann, wodurch die Komprimierung des Dichtelements begrenzt wird.

6. Dichtung nach Anspruch 1, bei der die Halterung (12) ferner eine Schürze (50) aufweist, die den Außenumfang (22) umgibt, wobei die Schürze ein oder mehr Segmente (50a, 50b) hat, welche sich axial nach unten über die Schulter (39a, 39b) einer der Seiten der Halterung hinweg erstreckt, und bei der, wenn der Außendurchmesserwulst (64a) an der ersten Radialseite (32a) des Dichtelements in der Nut (112a) des Flansches (106a) sitzt, die Schürzensegmente in einer eingreifenden Verrastung um den Außenumfang der Flanschvorderseite aufnehmbar sind, um die Dichtung an dem Flansch zu halten.

7. Dichtung nach Anspruch 1, bei der das Dichtelement auf die Halterung aufgegossen ist, wobei es sich über dessen Innenumfang erstreckt.

8. Dichtung nach Anspruch 1, bei der die Halterung aus einem Kunststoffmaterial gebildet ist und das Dichtelement aus einem elastomeren Polymermaterial gebildet ist.

9. Fittingverbindung, die ein Fitting mit einem offenen Ende aufweist, das von einem Flansch umgeben ist, wobei der Flansch eine Vorderseite hat, die sich von dem offenen Rohrende zu einem Außenumfang radial nach außen erstreckt, wobei die Vorderseite eine umlaufende Nut hat, die in dieser nahe des Außenumfangs gebildet ist, und die eine Dichtung, wie in einem der Ansprüche 1 bis 8 beansprucht, aufweist.

## Revendications

1. Joint (10) pour un raccordement de raccord, le raccordement comprenant un raccord (100) ayant une extrémité ouverte entourée par une bride (1 06a), la bride ayant une face avant (1 08a) s'étendant radialement vers l'extérieur à partir de l'extrémité ouverte de tube jusqu'à une périphérie externe (110a), la face ayant une rainure circonférentielle (112a) formée à l'intérieur de cette dernière, adjacente à la périphérie externe, le joint comprenant :
un dispositif de retenue généralement annulaire (12) ayant un périmètre interne (24) et un périmètre externe (22), et ayant des premier et second côtés (32a, 32b) opposés s'étendant chacun dans une direction radiale entre les périmètres interne et externe, et
un élément d'étanchéité généralement annulaire (14) disposé sur le dispositif de retenue, l'élément d'étanchéité ayant une première face radiale (60a) sur le premier côté (32a) du dispositif de retenue et une seconde face radiale (60b) sur le second côté (32b) du dispositif de retenue,
**caractérisé en ce que** chacun des premier et second côtés du dispositif de retenue a un évidement circonférentiel (36a, 36b) s'étendant à partir du périmètre interne (24) jusqu'à une paroi d'extrémité axiale (38a, 38b) adjacente au périmètre externe (22) définissant un épaulement droit (39a, 39b) entourant l'évidement, l'élément d'étanchéité (14) étant disposé dans les évidements sur chacun des côtés (32a, 32b) du dispositif de retenue (12), et
chacune des faces radiales (60a, 60b) de l'élément d'étanchéité (14) a un bourrelet de diamètre interne circonférentiel (62a, 62b) et un bourrelet de diamètre externe circonférentiel (64a, 64b) s'étendant de manière axiale au-delà du bourrelet de diamètre interne (62a, 62b), dans lequel le bourrelet de diamètre externe (64a, 64b) sur la première face radiale (60a) de l'élément d'étanchéité (14) est configuré de sorte que, à l'usage, il peut être installé à l'intérieur de la rainure (112a) de la bride (106a) et dans lequel, avec le bourrelet de diamètre externe (64a) sur la première face radiale (60a) qui est installé à l'intérieur de la rainure (112a) de la bride (106a), le bourrelet de diamètre interne (62a) sur la première face radiale (60a) peut se mettre en prise de manière étanche avec la face avant de la bride lorsqu'il est comprimé entre la face avant (1 08a) de la bride et une surface en vis-à-vis (1 08b).

2. Joint selon la revendication 1, dans lequel le périmètre interne (22) du dispositif de retenue s'étend de manière radiale au-delà de chacun des bourrelets de diamètre interne (62a, 62b) de l'élément d'étanchéité (14).

3. Joint selon la revendication 1, dans lequel chacun des bourrelets de diamètre interne (62a, 62b) de l'élément d'étanchéité (14) s'étend de manière axiale au-delà de l'épaulement (39a, 39b) sur le côté (32a, 32b) correspondant du dispositif de retenue (12).

4. Joint selon la revendication 1, dans lequel, avec le bourrelet de diamètre externe (64a) sur la première face radiale (32a) de l'élément d'étanchéité (14) qui est installé dans la rainure (112a) de la bride (1 06a), et avec le bourrelet de diamètre externe (64b) sur la seconde face radiale (32a) qui est installé à l'intérieur d'une rainure (112b) de la surface en vis-à-vis (108b), lorsque le joint est comprimé de manière axiale entre la face avant (108a) de la bride et la surface en vis-à-vis (108b), chacun des épaulements (39a, 39b) peut venir en butée contre l'une correspondante parmi la face avant de la bride et la surface en vis-à-vis délimitant la compression de l'élément d'étanchéité.

5. Joint selon la revendication 1, dans lequel le dispositif de retenue (12) comprend en outre au moins une partie relevée (40a, 40b) s'étendant de manière axiale à partir de l'évidement (36a, 36b) de chaque côté du dispositif de retenue, et dans lequel avec le bourrelet de diamètre externe (64a) sur la première face radiale (32a) de l'élément d'étanchéité (14) qui est installé à l'intérieur de la rainure (112a) de la bride (1 06a), et avec le bourrelet de diamètre externe (64b) sur la seconde face radiale (32b) qui est installé à l'intérieur d'une rainure (112b) d'une surface en vis-à-vis (108b), lorsque le joint est comprimé de manière axiale entre la face avant de la bride et la surface en vis-à-vis, chaque zone relevée peut venir en butée contre l'une correspondante parmi la face avant de la bride et la surface en vis-à-vis, délimitant la compression de l'élément d'étanchéité.

6. Joint selon la revendication 1, dans lequel le dispositif de retenue (12) comprend en outre une jupe (50) entourant le périmètre externe (22), la jupe ayant un ou plusieurs segments (50a, 50b) qui s'étendent de manière axiale vers le bas au-delà de l'épaulement (39a, 39b) de l'un des côtés du dispositif de retenue, et dans lequel avec le bourrelet de diamètre externe (64a) sur la première face radiale (32a) de l'élément d'étanchéité qui est installé à l'intérieur de la rainure (112a) de la bride (1 06a), les segments de jupe peuvent être reçus dans une mise en prise par interférence autour de la périphérie externe de la face avant de la bride pour retenir le joint sur la bride.

7. Joint selon la revendication 1, dans lequel l'élément d'étanchéité est surmoulé sur le dispositif de retenue lorsqu'il s'étend autour de son périmètre interne.

8. Joint selon la revendication 1, dans lequel le dispositif de retenue est formé avec une matière plastique et l'élément d'étanchéité est formé avec une matière polymère élastomère.

9. Raccordement de raccord comprenant un raccord ayant une extrémité ouverte entourée par une bride, la bride ayant une face avant s'étendant radialement vers l'extérieur à partir de l'extrémité ouverte de tube jusqu'à une périphérie externe, la face ayant une rainure circonférentielle formée dans cette dernière, adjacente à la périphérie externe, et le joint selon l'une quelconque des revendications 1 à 8.
